# EUROPÄISCHE PATENTANMELDUNG

(11) **EP 1 700 767 A2**
(43) Veröffentlichungstag der Anmeldung: **13.09.2006**
(21) Anmeldenummer: 06004294.2
(22) Anmeldetag: 03.03.2006
(51) Int. Cl.: B62B 5/06

(54) **Deichselgeführtes Flurförderzeug**

(30) Priorität: 08.03.2005 DE 102005010640
(71) Anmelder: STILL S.A.R.L., 77107 Meaux Cedex (FR)
(72) Erfinder: Alegre, Jean-Pierre, 60150 Thourotte (FR); Brouart, Francois, 60200 Compiegne (FR); Ferreira, Paulo, 60870 Rieux (FR)
(74) Vertreter: Kasseckert, Rainer

(57) **Zusammenfassung**

Die Erfindung betrifft ein deichselgeführtes Flurförderzeug (1) mit einer längenvariablen Deichsel (2). Es ist mindestens eine kraftangetriebene Vorrichtung (13) zur Veränderung der Länge (L_{d}) der Deichsel (2) vorgesehen.

## Beschreibung

Die Erfindung betrifft ein deichselgeführtes Flurförderzeug mit einer längenvariablen Deichsel. Die Länge der Deichsel eines deichselgeführten Flurförderzeugs wird von verschiedenen Anforderungen bestimmt. Einerseits soll die Deichsel möglichst lang sein, um beim Lenken durch einen langen Hebelarm niedrige Lenkkräfte zu ermöglichen und durch einen großen Abstand der Bedienperson vom Flurförderzeug die Sicherheit zu verbessern. Andererseits soll die Deichsel möglichst kurz sein, um den für Rangiermanöver benötigten Raum zu verringern. Um diese Anforderungen zu erfüllen, sind Deichseln zumeist um eine horizontale Schwenkachse beweglich ausgeführt, um durch Aufstellen der Deichsel in eine annähemd senkrechte Lage den Platzbedarf zu verringern und gleichzeitig bei weniger beengten Platzverhältnissen durch eine annähend wagerechte Stellung der Deichsel einen langen Hebelarm zu bieten. Dabei ist die Länge der Deichsel dadurch begrenzt, dass bei aufgestellter Deichsel die Bedienbarkeit auch für kleine Bedienpersonen noch möglich sein muss. Um den nutzbaren Hebelarm bei annähernd waagerechter Deichsel zu vergrößern, ist es aus der DE 27 51 333 bekannt, eine längenvariable Deichsel vorzusehen, die in annähernd senkrechter Stellung eine geringere Länge aufweist als in annähernd waagerechter Stellung. Da die Länge der Deichsel jedoch über eine mechanische Zwangskopplung von dem Schwenkwinkel um die horizontale Achse abhängt, hat die Bedienperson ein ungenaues Steuergefühl und muss beim Rangieren auf engem Raum eine ungünstige erhöhte Stellung der Deichsel wählen. Bei dieser Ausführung liegt es zudem im Ermessen der Bedienperson, die geeignete Deichsellänge über den Abstand zum Flurförderzeug zu wählen, was zusätzliche Aufmerksamkeit benötigt.

Der Erfindung liegt daher die Aufgabe zugrunde, ein deichselgeführtes Flurförderzeug mit einer längenvariablen Deichsel zu schaffen, das bei unterschiedlichen Betriebssituationen eine möglichst günstige Länge der Deichsel aufweist, um ein sicheres sowie ermüdungsarmes Rangieren und Fahren zu ermöglichen.

Diese Aufgabe wird erfindungsgemäß dadurch gelöst, dass mindestens eine kraftangetriebene Vorrichtung zur Veränderung der Länge L_{d} der Deichsel vorgesehen ist. Indem die Länge der Deichsel über eine kraftangetriebene Vorrichtung einstellbar ist, wird eine einfache und schnelle Verstellung der Deichsellänge ermöglicht. Da keine starre mechanische Zwangskopplung zur Einstellung der Deichsellänge L_{d} gegeben ist, kann die Länge der Deichsel optimal auf die jeweiligen Einsatzbedingungen abgestimmt werden.

Besonders vorteilhaft ist es, wenn die Länge L_{d} der Deichsel mittels einer elektrischen Steuerung in Abhängigkeit von mindestens einem Betriebsparameter des Flurförderzeugs veränderbar ist, wobei die Betriebsparameter insbesondere folgende Größen umfassen: Fahrgeschwindigkeit, Fahrtrichtung, Lastgewicht, Einsatzort, Nutzerprofile, Anstellwinkel der Deichsel, Lenkwinkel, Neigung des Flurförderzeugs. Eine Einstellung der Deichsellänge in Abhängigkeit von Betriebsparametern des Flurförderzeugs ermöglicht eine optimale Anpassung der Deichsellänge an den Betriebszustand. Dadurch wird die Sicherheit des Betriebs verbessert, da die Bedienperson keine Einstellungen vornehmen muss und sich auf die Bedienung des Fahrzeugs konzentrieren kann

Vorteilhafterweise ist die Länge L_{d} der Deichsel mittels Bedienelementen von der Bedienperson des Flurförderzeugs veränderbar. In besonderen Betriebssituationen kann eine besondere Einstellung der Deichsellänge notwendig sein. Indem diese auf einfachem Wege von der Bedienperson vorgenommen werden kann, ist ein schneller und problemloser Betrieb gewährleistet. Auch kann auf diesem Weg eine Grundeinstellung der Deichsellänge vorgenommen werden, um beispielsweise deren minimale Länge L_{d,min} und/oder maximale Länge L_{d,max} an die Körpergröße der Bedienperson anzupassen.

In einer vorteilhaften Ausbildung aufweist die Vorrichtung zur Veränderung der Länge L_{d} der Deichsel mindestens einen Elektromotor. Elektrische Energie ist in Flurförderzeugen einfach verfügbar. Elektromotoren sind klein, einfach ansteuerbar und kostengünstig.

In einer weiteren vorteilhaften Ausführungsform weist die Vorrichtung zur Veränderung der Länge L_{d} der Deichsel mindestens einen hydraulischen Antrieb auf. Hydraulische Energie ist in Flurförderzeugen zumeist einfach verfügbar. Hydraulische Antriebe sind robust und bieten insbesondere in Form von Hydraulikzylindern einen einfachen Antrieb für lineare Verstellvorrichtungen.

In einer vorteilhaften Ausgestaltung der Erfindung weist die Vorrichtung zur Veränderung der Länge L_{d} der Deichsel mindestens einen Gewindetrieb auf. Ein Gewindetrieb stellt eine einfache Verstellmöglichkeit dar, die sich bei Abschaltung des Antriebsmotors relativ einfach fixieren lässt. Die Deichsel erscheint der Bedienperson damit genauso starr, wie sie es von herkömmlichen Geräten gewohnt ist.

In einer weiteren vorteilhaften Ausgestaltung der Erfindung aufweist die Vorrichtung zur Veränderung der Länge der Deichsel L_{d} mindestens einen Riementrieb. Ein Riementrieb ist einfach und kostengünstig herstellbar und kann je nach Beschaffenheit des Riemens Federungsfunktionen übernehmen, so dass bei einer Kollision des Deichselkopfs mit einem Hindernis eine gewisse Nachgiebigkeit gegeben ist.

Eine weitere vorteilhafte Ausgestaltung der Erfindung besteht darin, dass die Vorrichtung zur Veränderung der Länge L_{d} der Deichsel mindestens einen Zahnstangentrieb aufweist. Ein Zahnstangentrieb ist einfach aufgebaut und robust.

Es ist zweckmäßig, wenn die Differenz zwischen maximaler Länge und minimaler Länge L_{d} der Deichsel zwischen 50 mm und 500 mm, vorzugsweise annähernd 100 mm beträgt. Deichsellängenänderungen in diesem Bereich sind einerseits ausreichend groß, um die geschilderten positiven Wirkungen zu ermöglichen und andererseits klein genug, um die Rangiereigenschaften des Fahrzeugs nicht wesentlich zu verschlechtern.

Zweckmäßigerweise ist eine Verlängerung der Deichsel in Abhängigkeit von einem Betriebsparameter des Flurförderzeugs erst bei Überschreiten und/oder Unterschreiten eines vorgegebenen Grenzwertes für diesen Betriebsparameter vornehmbar. Dadurch können Bereiche für einzelne Betriebsparameter festgelegt werden, innerhalb derer die Länge L_{d} der Deichsel fest bleibt. Dies ist insbesondere bei Betriebssituationen, beispielsweise beim Rangieren auf engem Raum, vorteilhaft, bei denen eine feinfühlige Bedienung erforderlich ist, die durch eine Verstellung der Deichsel gestört werden könnte.

In einer vorteilhaften Ausgestaltung der Erfindung ist mit zunehmender Fahrgeschwindigkeit die Länge L_{d} der Deichsel vergrößerbar. Dadurch wird bei annähernd gleichem Anstellwinkel der Deichsel ein größerer Abstand zwischen Bedienperson und Flurförderzeug erzielt, was die Sicherheit, insbesondere bei plötzlichen Haltemanövern, verbessert.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: einen erfindungsgemäßen Niederhubwagen mit längenvariabler Deichsel in Seitenansicht sowie ein Diagramm zur Abhängigkeit der Deichsellänge L_{d} von der Fahrgeschwindigkeit des Flurförderzeugs,
- Figur 2: die Deichsel eines erfindungsgemäßen Flurförderzeugs in einer Schnittbilddarstellung in Seitenansicht,

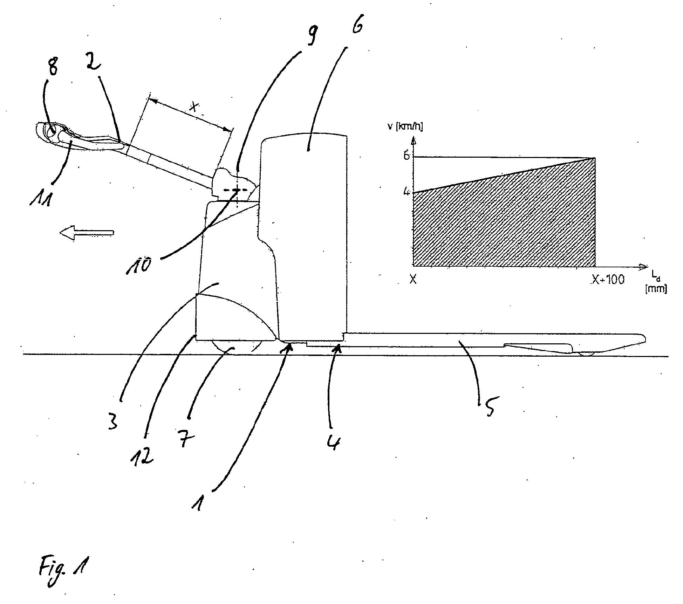

Figur 1 zeigt einen Niederhubwagen 1 mit längenvariabler Deichsel 2 als Beispiel eines erfindungsgemäßen Flurförderzeugs. Das Flurförderzeug 1 besteht aus einem Antriebsteil 3 und einem Lastteil 4, der ein gabelförmiges Lastaufnahmemittel 5 aufweist. Vor dem Lastaufnahmemittel 5 ist ein Batteriefach 6 mit einer hier nicht dargestellten Batterie angeordnet. Vor dem Batteriefach 6 wiederum ist im Antriebsteil 3 eine hier nicht dargestellte Antriebseinheit angeordnet, die im Wesentlichen aus einem Elektromotor, einem Getriebe und einem Antriebsrad 7 besteht. Die Bedienperson führt das Flurförderzeug 1 mittels der Deichsel 2, indem sie über Bedienelemente in Form zweier Flügelschalter 8 Geschwindigkeit und Fahrtrichtung vorgibt, während das Antriebsrad 7 durch ein Verschwenken der Deichsel 2 um eine vertikale Achse 9 gelenkt wird. Weiterhin ist die Deichsel 8 um eine horizontale Schwenkachse 10 drehbar gelagert, so dass diese von einer annähernd waagerechten Stellung in eine annähernd senkrechte Stellung angehoben werden kann. Im gezeigten Ausführungsbeispiel ist eine Veränderung der Länge L_{d} der Deichsel in Abhängigkeit von der Fahrgeschwindigkeit des Niederhubwagens 1 realisiert. Der Zusammenhang zwischen Fahrgeschwindigkeit v und Deichsellänge L_{d} ist in dem in Figur 1 gezeigten Diagramm wiedergegeben. Bis zu einer Fahrtgeschwindigkeit v von 4 km/h ist die Deichsellänge L_{d} unverändert und als Wert X gekennzeichnet. Bei größeren Geschwindigkeiten bis zur Maximalgeschwindigkeit von 6 km/h vergrößert sich die Länge der Deichsel 2 proportional zur Geschwindigkeit v um insgesamt 100 mm. Dadurch hält eine Bedienperson, wenn sie sich in Richtung des Pfeils bewegt und die Höhe des Deichselkopf 11 beibehält, automatisch einen um annähernd diesen Betrag größeren Abstand zum Fahrzeug 1, wodurch sich die Sicherheit der Bedienperson erhöht, da insbesondere bei plötzlichen Anhaltemanövern der Abstand zwischen der Vorderkante 12 des Flurförderzeugs 1 und den in diesem Fall besonders gefährdeten Füßen der Bedienperson gegenüber dem Normalzustand vergrößert ist.

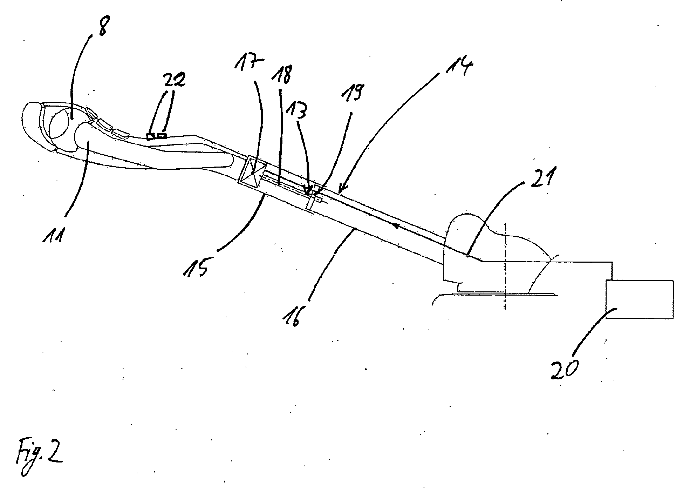

Figur 2 zeigt schematisch eine Vorrichtung 13 zur Veränderung der Länge der Deichsel 2. Der Deichselschaft 14 ist zweiteilig ausgeführt, wobei ein äußerer Teil 15 auf einem inneren Teil 16 derart geführt ist, dass eine Längenverstellung der Deichsel 2 ermöglicht wird. Nahe des Deichselkopfes 11 ist ein Elektromotor 17 angeordnet, der einen Gewindetrieb 13 antreibt. Der Gewindetrieb 13 besteht im Wesentlichen aus einer Spindel 18, die mit dem Motor 17 und damit mit dem oberen Teil 15 des Deichselschafts 14 verbunden ist, und einer Mutter 19, die mit dem unteren Teil 16 des Deichselschafts 14 verbunden ist. Bei Betätigung des Motors 17 rotiert die Spindel 18, so dass die Länge der Deichsel 2 verändert wird. Im Antriebsteil 3 ist eine elektrische Steuerung 20 angeordnet, die mit dem Motor 17 über Leitungen 21 in Wirkverbindung steht. Die elektrische Steuerung 20 steuert auch die Fahr- und Hubantriebe des Flurförderzeugs 1. In Abhängigkeit von der Fahrgeschwindigkeit v des Flurförderzeugs 1, die durch die Flügelschalter 8 vorgegeben wird, wird die Drehrichtung und Drehdauer des Motors 17 so gesteuert, dass die gemäß dem Diagramm in Figur 1 vorgegebene Länge L_{d} der Deichsel 2 erreicht wird. Die größte Gefahr besteht bei Bewegungen des Flurförderzeugs 1 zur Bedienperson hin, also in Richtung des Deichselkopfs 11. Dementsprechend wird nur bei einer Fahrt in Richtung des Deichselkopfs 11, also bei Vorwärtsfahrt des Flurförderzeugs 1, die Deichsel 2 über ihre Grundlänge X hinaus verlängert.
Neben der Einstellung der Deichsellänge L_{d} mittels der elektrischen Steuerung 20 ist auch eine Einstellung über Bedienelemente 22 durch die Bedienperson möglich. Dadurch kann die Bedienperson die Deichsel 2 nach ihren Bedürfnissen einstellen, also beispielsweise eine groß gewachsene Bedienperson eine große Deichsellänge L_{d} vorwählen und eine klein gewachsene Bedienperson eine kurze Deichsellänge L_{d}.

Selbstverständlich sind auch andere Ausführungsformen denkbar. Anstelle einer Einstellung der Deichsellänge L_{d} in Abhängigkeit von der Stellung der Flügelschalter 8 kann diese auch in Abhängigkeit von anderen zur Fahrgeschwindigkeit v proportionalen Größen, beispielsweise der Motordrehzahl eines Fahrmotors oder dessen Eingangsströmen und Spannungen eingestellt werden. Insbesondere können anstelle oder zusätzlich zur Fahrgeschwindigkeit v und Fahrtrichtung weitere Betriebsparameter berücksichtigt werden. Die wichtigsten Parameter sind Lastgewicht, Einsatzort, Nutzerprofile, Anstellwinkel der Deichsel, Lenkwinkel, Neigung des Flurförderzeugs 1. So kann bei schweren Lasten und damit größeren Lenkkräften und erhöhtem Bremsweg eine größere Deichsellänge L_{d} vorgesehen sein als bei leichten Ladungen oder unbeladenem Fahrzeug. Auch eine Veränderung der Länge L_{d} der Deichsel 2 in Abhängigkeit vom Einsatzort ist denkbar, entweder durch feste Vorgabe von seiten des Herstellers beziehungsweise im Rahmen von Serviceleistungen oder durch geeignete Detektion des Umfelds, so dass beispielsweise in engen Bereichen selbsttätig die Länge L_{d} der Deichsel 2 verkürzt wird, während bei ausreichend Raum die Deichsel 2 auf maximale Länge L_{d, max} eingestellt wird. Verfügt das Flurförderzeug über ein Bedieneridentifikationssystem, kann die Deichsellänge L_{d} in Abhängigkeit vom Benutzer eingestellt werden, so dass für große Bedienpersonen beispielsweise eine größere minimale Länge L_{d, min} der Deichsel als für kleine Bedienpersonen vorgesehen sein kann. Eine Veränderung der Deichsellänge L_{d} in Abhängigkeit vom Anstellwinkel ist ebenso denkbar, so dass beispielsweise nur bei einer sehr flach gehaltenen Deichsel die maximale Länge L_{d}, ₘₐₓ verfügbar ist. Auch beim Befahren von Steigungen und Rampen, bei denen erhöhte Gefahr besteht, dass das Flurförderzeug 1 ins Rutschen gerät, kann die Deichsellänge L_{d} vergrößert werden, um zusätzliche Sicherheit für die Bedienperson zu bieten. Selbstverständlich ist auch eine Veränderung der Deichsellänge L_{d} in Abhängigkeit von anderen als den hier genanten Betriebsparametem möglich, ebenso wie in Abhängigkeit von einer Kombination von Parametem.

Die maximale Längenänderung beträgt im gezeigten Ausführungsbeispiel 100 mm, jedoch sind auch hier andere Längen möglich. Anstelle des Gewindetriebs 13 sind auch andere Anordnungen denkbar, beispielsweise mittels eines Zahnstangentriebs oder eines Riementriebs. Weiterhin sind auch Ausführungen denkbar, bei denen anstelle einer motorischen Verstellung der Deichsel 2 hydraulisch öder pneumatisch angetriebene Verstellvorrichtungen vorgesehen sind. Hydraulische Verstellvorrichtungen sind insbesondere in Form von Hydraulikzylindern sehr gut geeignet, da diese einen großen linearen Verstellweg bieten und in Flurförderzeugen zumeist zur Betätigung der Hubfunktionen bereits eine Hydraulikanlage installiert ist. Bei einer hydraulischen Verstellung ist sowohl eine Fixierung der Deichsel 2 bei einer eingestellten Länge durch Absperren der Zuleitungen als auch eine Federwirkung der Deichsel 2 zum Schutz der Bedienperson bei Kollisionen mittels eines Gasspeichers denkbar.

## Patentansprüche

1. Deichselgeführtes Flurförderzeug (1) mit einer längenvariablen Deichsel (2), **dadurch gekennzeichnet, dass** mindestens eine kraftangetriebene Vorrichtung (13) zur Veränderung der Länge (L_{d}) der Deichsel (2) vorgesehen ist.

2. Deichselgeführtes Flurförderzeug (1) nach Anspruch 1, **dadurch gekennzeichnet, dass** die Länge (L_{d}) der Deichsel (2) mittels einer elektrischen Steuerung (20) in Abhängigkeit von mindestens einem Betriebsparameter des Flurförderzeugs (1) veränderbar ist, wobei die Betriebsparameter insbesondere folgende Größen umfassen: Fahrgeschwindigkeit, Fahrtrichtung, Lastgewicht, Einsatzort, Nutzerprofile, Anstellwinkel der Deichsel (2), Lenkwinkel, Neigung des Flurförderzeugs (1).

3. Deichselgeführtes Flurförderzeug nach Anspruch 1 oder 2, **dadurch gekennzeichnet, dass** die Länge (L_{d}) der Deichsel (2) mittels Bedienelementen (22) von der Bedienperson des Flurförderzeugs (1) veränderbar ist.

4. Deichselgeführtes Flurförderzeug nach einem der Ansprüche 1 bis 3, **dadurch gekennzeichnet, dass** die Vorrichtung (13) zur Veränderung der Länge (L_{d}) der Deichsel (2) mindestens einen Elektromotor (17) aufweist.

5. Deichselgeführtes Flurförderzeug nach einem der Ansprüche 1 bis 3, **dadurch gekennzeichnet, dass** die Vorrichtung (21) zur Veränderung der Länge (L_{d}) der Deichsel (2) mindestens einen hydraulischen Antrieb aufweist.

6. Deichselgeführtes Flurförderzeug (1) nach einem der Ansprüche 1 bis 3, **dadurch gekennzeichnet, dass** die Vorrichtung (13) zur Veränderung der Länge (L_{d}) der Deichsel (2) mindestens einen Gewindetrieb (13) aufweist.

7. Deichselgeführtes Flurförderzeug (1) nach einem der Ansprüche 1 bis 3, **dadurch gekennzeichnet, dass** die Vorrichtung (13) zur Veränderung der Länge (L_{d}) der Deichsel (2) mindestens einen Riementrieb aufweist.

8. Deichselgeführtes Flurförderzeug (1) nach einem der Ansprüche 1 bis 3, **dadurch gekennzeichnet, dass** die Vorrichtung (13) zur Veränderung der Länge (L_{d}) der Deichsel (2) mindestens einen Zahnstangentrieb aufweist.

9. Deichselgeführtes Flurförderzeug (1) nach einem der Ansprüche 1 bis 6, **dadurch gekennzeichnet, dass** die Differenz zwischen maximaler Länge und minimaler Länge der Deichsel (2) zwischen 50 mm und 500 mm, vorzugsweise annähernd 100 mm beträgt.

10. Deichselgeführtes Flurförderzeug nach einem der Ansprüche 1 bis 3, **dadurch gekennzeichnet, dass** eine Verlängerung der Deichsel (2) in Abhängigkeit von der einem Betriebsparameter des Flurförderzeugs (1) erst bei Überschreiten und/oder Unterschreiten eines vorgegebenen Grenzwertes für diesen Betriebsparameter vornehmbar ist.

11. Deichselgeführtes Flurförderzeug nach einem der Ansprüche 1 bis 3, **dadurch gekennzeichnet, dass** mit zunehmender Fahrgeschwindigkeit (v) die Länge (L_{d}) der Deichsel (2) vergrößerbar ist.
